# EUROPÄISCHE PATENTSCHRIFT

(11) **EP 2 526 036 B1**
(45) Veröffentlichungstag und Bekanntmachung des Hinweises auf die Patenterteilung: **11.05.2016**
(21) Anmeldenummer: 11701354.0
(22) Anmeldetag: 17.01.2011
(51) Int. Cl.: B65G 39/16

(54) **BANDLAUFREGELVORRICHTUNG, INSBESONDERE EINER FORM- UND KÜHLVORRICHTUNG**
BELT RUN CONTROL DEVICE, IN PARTICULAR OF A FORMING AND COOLING DEVICE
DISPOSITIF DE RÉGLAGE DE DÉFILEMENT DE BANDE, EN PARTICULIER D'UN DISPOSITIF DE MOULAGE ET DE REFROIDISSEMENT

(30) Priorität: 21.01.2010 DE 102010005301
(43) Veröffentlichungstag der Anmeldung: 28.11.2012
(73) Patentinhaber: Hochland SE, 88178 Heimenkirch (DE)
(72) Erfinder: BIGGEL, Andreas, 88145 Hergatz (DE)
(74) Vertreter: Hoefer & Partner Patentanwälte mbB
(86) Internationale Anmeldenummer: PCT/EP2011/000166
(87) Internationale Veröffentlichungsnummer: WO 2011/088978

(56) Entgegenhaltungen:
- EP-A1- 0 659 663
- EP-A2- 0 443 799
- EP-A2- 0 519 454
- WO-A1-2005/000012
- WO-A1-2005/028349
- DD-A1- 203 507
- DE-A1- 19 647 763
- JP-A- 59 172 313
- JP-A- 61 012 552
- JP-A- 64 002 070
- US-A- 2 635 475
- US-A- 5 471 289
- US-A- 5 979 641

## Beschreibung

Die Erfindung bezieht sich auf eine Bandlaufregelvorrichtung gemäß dem Oberbegriff des Anspruches 1 und im speziellen auf eine Bandlaufregelvorrichtung eines endlosen Bandes, welches über zumindest eine zylindrische Walze geführt und mittels dieser gespannt wird.

Weiterhin bezieht sich die Erfindung auf eine Form- und Kühlvorrichtung, so wie sie beispielsweise in der DE 103 28 905 A1 beschrieben ist, welche mit einer erfindungsgemäßen Bandlaufregelvorrichtung versehen ist.

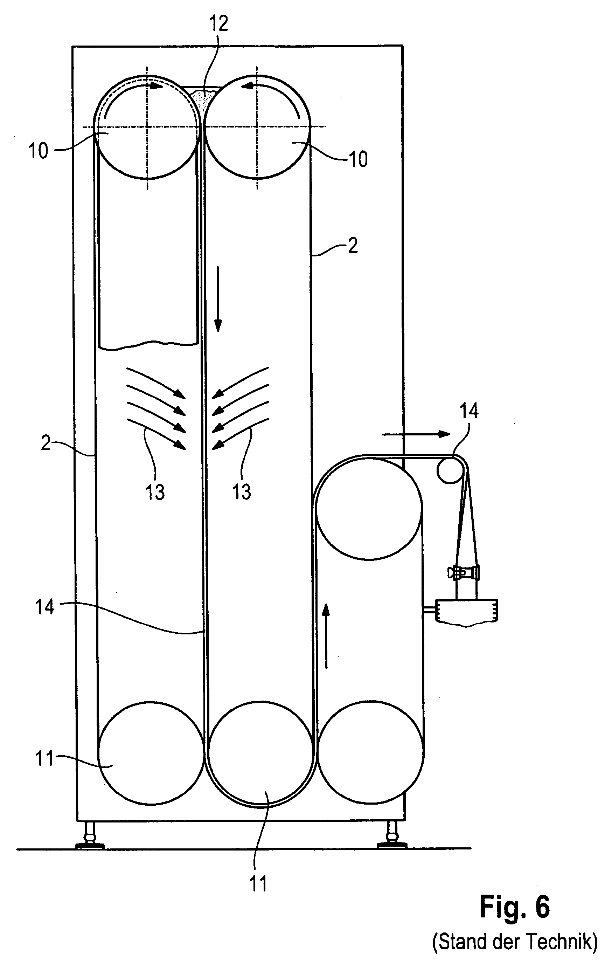

Die Fig. 6 zeigt eine Darstellung einer aus dem Stand der Technik bekannten Form- und Kühlvorrichtung, welche beispielsweise in der DE 103 28 905 A1 beschrieben ist. Die Vorrichtung umfasst zwei zueinander beabstandete, endlose, um eine obere Walze 10 und eine untere Walze 11 umlaufende Bänder 2. Zwischen die Bänder wird eine fließfähige, aufgeschmolzene Lebensmittelmasse 12 (Käseschmelze) eingefüllt und zu einem Band 14 abgekühlt. Die Abkühlung erfolgt durch Aufbringung einer Kühlflüssigkeit 13 auf die dem Band 14 der Lebensmittelmasse abgewandte Seite der Bänder 2.

Derartige endlose, umlaufende Bänder werden auf unterschiedliche Weise vorgespannt, wobei eine geringfügig unterschiedliche Vorspannung auf beiden Seiten der Bänder und eine sich daraus ergebende Schrägstellung einer Walze dazu führen kann, dass das Band seitlich von der Walze läuft, hierdurch beschädigt wird und andere Komponenten beschädigt. Somit ist es erforderlich, den Bandlauf einzujustieren.

Der Stand der Technik zeigt mit der DE 196 47 763 C2 eine Einrichtung zur Steuerung des Geradlaufes eines endlosen Bandes. Dabei wird eine Walze beidseitig mittels elastischer Elemente vorgespannt. An einem Lagerende der Walze ist eine Kolben-Zylinder-Einheit vorgesehen, welche eine zusätzliche, in Richtung der Federvorspannung wirkende Kraft aufbringen kann, um das Band auf der Walze zu zentrieren und den Bandlauf zu regeln. Die Betätigung der einseitig additiv bzw. subtraktiv zur Federkraft wirkenden Kolben-Zylinder-Einheit erfolgt mittels zweier seitlicher Abtastfinger, welche die Bandposition abtasten (aktuell sind berührungslose Initiatoren eingesetzt).

Die DD 203 507 C2 zeigt eine ähnliche Vorrichtung zum Stabilisieren eines endlosen Stahlbandes, bei welcher das Band mittels seitlich an den Lagern der Walze angreifender Federvorspannvorrichtungen ungleich vorgespannt wird und somit in eine Richtung abzulaufen versucht. Mittels eines Fühlers wird eine derartige Bandbewegung ermittelt. Über ein Stellglied wird additiv zur Federvorspannung eine Kraft aufgebracht.

Weiterhin zeigt der Stand der Technik beidseitig auf die Lager der Walze wirkende Kolben-Zylinder-Einheiten (DE 202 10 624 U1). Eine ähnliche Vorrichtung ist aus der DE 101 06 206 A1 vorbekannt. Auch die DE-PS 1 250 228 und die BE 536 431 zeigen derartige Konstruktionen.

Die vorbekannten Vorrichtungen sind hinsichtlich ihrer Regelungen aufwendig und nur bedingt präzise. Bei den Kolben-Zylinder-Einheiten ist eine differenzierte Kraftaufbringung nicht oder nur mit erheblichem technischen Aufwand möglich, die additiven Kraftaufbringungen zu den Vorspannfedern sind ebenfalls technisch aufwendig und nicht unter allen Einsatzbedingungen zuverlässig.

Die DE 196 47 763 A1 zeigt eine gattungsgemäße Einrichtung zur Steuerung des Geradlaufes eines endlosen Bandes. Das Band wird über Umlenkwalzen geführt. Zur Korrektur eines Fehl-Laufes des Bandes wird mittels einer zusätzlichen Kolben-Zylindereinheit in einer Richtung eine Zusatzkraft aufgebracht, nämlich eine Zusatzkraft, welche additiv zu einem der das Band vorspannenden elastischen Elemente vorgesehen ist.

Der Erfindung liegt die Aufgabe zugrunde, eine Bandlaufregelvorrichtung sowie eine Form- und Kühlvorrichtung der eingangs genannten Art zu schaffen, welche bei einfachem Aufbau und einfacher, betriebssicherer Anwendbarkeit eine zuverlässige Bandlaufregelung ermöglichen.

Erfindungsgemäß wird die Aufgabe durch die Merkmalskombination der unabhängigen Ansprüche gelöst, die jeweiligen Unteransprüche zeigen weitere vorteilhafte Ausgestaltungen der Erfindung.

Erfindungsgemäß ist somit hinsichtlich der Bandlaufregelvorrichtung vorgesehen, dass als Verstellelement zur Aufbringung einer additiv- oder subtraktiv zur Vorspannkraft zumindest eines der elastischen Elemente wirkenden Kraft ausgebildet ist. Erfindungsgemäß ist es somit möglich, ganz gezielt einseitig die Vorspannung des endlosen Bandes zu verändern, um den Bandlauf zu regeln und um das Band hinsichtlich der Walze zu zentrieren. Dabei wird die eigentliche Spannung des Bandes durch die elastischen Elemente, welche bevorzugterweise als Tellerfeder-Pakete ausgebildet sind, aufgebracht. Eine derartige Konstruktion ist einfach und kostengünstig herstellbar und lässt sich in einfacher Weise den jeweiligen Betriebsbedingungen anpassen. Insbesondere ist es bei einem Wechsel des endlosen Bandes möglich, die Vorspannvorrichtung schnell und einfach zu montieren und einzujustieren.

Erfindungsgemäß wird durch das Verstellelement somit eine additive oder subtraktive Vorspannkraft aufgebracht, welche unterstützend oder gegenwirkend zur Kraft der elastischen Elemente wirkt. Da ein derartiges Band üblicherweise langsam umläuft (beispielsweise mit 1 bis 12 m/min.), ergibt sich bei einer ungleichen Bandspannung ein langsames Verlaufen. Dabei weist das Band hinsichtlich der Verlaufbewegung eine relativ große Hysterese auf. Infolgedessen ist es erfindungsgemäß zur Bandlaufregelung besonders günstig, dass additiv oder subtraktiv zur Vorspannkraft eine Zusatzkraft aufgebracht werden kann. Diese kann beispielsweise über einen kürzeren Zeitraum von beispielsweise 10 min. bis 15 min. eine größere Kraft sein, um eine Bewegung des Bandes zu initiieren. Die länger dauernde Korrektur der Vorspannkraft kann dann mit einer geringeren Kraftaufbringung erfolgen. So ist es erfindungsgemäß mittels der Kolben-Zylinder-Einheit möglich, beispielsweise über einen kürzeren Zeitraum von 10 min. bis 15 min. eine Kraft durch Aufbringung eines Hydraulikdruckes bzw. Pneumatik von 1,5 bar zu bewirken, während die langfristige Korrektur der Vorspannkraft beispielsweise lediglich einen Druck von 0,1 bar erfordert.

Durch die erfindungsgemäß vorgesehene Möglichkeit, additiv oder subtraktiv zur Vorspannkraft eine Zusatzkraft aufzubringen und diese wegunabhängig auch über einen längeren Zeitraum aufrechtzuerhalten, ist es möglich, beispielsweise Temperaturunterschiede des endlosen, umlaufenden Bandes und die durch unterschiedliche Längenausdehnungen resultierenden Bandlauf-Unterschiede auf einfache Weise auszuregeln und zu korrigieren. Die untere Walze, welche sich, beispielsweise durch Wärmeausdehnung des Bandes in ihrer Lage verändern kann, wird somit durch die Zusatzkraft beaufschlagt, so dass ein Verlaufen des Bandes durch Temperaturänderungen korrigiert wird. Die Zusatzkraft, die durch die Kolben-Zylinder-Einheit aufgebracht wird, bleibt dabei gleich, unabhängig von der sonstigen Lage der Walzenachse, welche sich beispielsweise durch die erwähnte Wärmeausdehnung oder unterschiedliche montageseitige Einstellungen verändern kann. Die durch die Kolben-Zylinder-Einheit aufgebrachte Zusatzkraft ist somit unabhängig vom Vorspannweg des Bandes.

In vorteilhafter Ausgestaltung der Erfindung ist vorgesehen, dass das Verstellelement in Form eines einseitigen Hebels ausgebildet ist, dessen einer Endbereich schwenkbar gelagert ist und an dessen anderem Endbereich bzw. am mittleren Bereich die Kolben-Zylinder-Einheit bzw. das elastische Vorspannelement gekoppelt sind.

Um erfindungsgemäß eine einfache Lagemessvorrichtung für das endlose Band bereitzustellen, ist es günstig, wenn die Lagemessvorrichtung nur einseitig an dem Band angeordnet ist. Sie umfasst dabei zumindest einen induktiv wirkenden Sensor. Besonders günstig ist es, wenn die Walze eine geringere Breite als das Band aufweist. Es ergibt sich somit ein seitlich überstehender Bereich des Bandes, welcher erfindungsgemäß durch die Lagemessvorrichtung erfassbar ist. Werden erfindungsgemäß beispielsweise zwei induktive Sensoren verwendet, so können diese seitlich versetzt angeordnet sein. Einer der Sensoren ermittelt somit den regulären seitlichen Überstand des Bandes, während der andere Sensor ein unerwünschtes seitliches Verlaufen des Bandes detektiert. Sollte das Band in die andere Richtung ablaufen, so würden beide Sensoren geänderte Ausgangswerte abgeben. Auf diese Weise ist es erfindungsgemäß sehr einfach möglich, mit geringem konstruktivem Aufwand eine Bandlaufregelung zu realisieren.

In der praktischen Umsetzung der Erfindung ist somit in besonders günstiger Ausgestaltung vorgesehen, dass die Sensoren jeweils mit 15 mm Abstand zur mittigen Lage der Bandkante angeordnet sind. Ein erster Sensor ist beispielsweise somit 15 mm außerhalb des Bandes, ein zweiter Sensor 15 mm innerhalb des Bandes angeordnet. Solange sich die Bandkante innerhalb dieser beiden Sensoren befindet, erfolgt kein Regeleingriff. Erst wenn der erste Sensor durch die Bandkante belegt wird oder wenn der zweite Sensor nicht mehr durch die Bandkante belegt wird, erfolgt ein Regeleingriff in die eine oder andere Richtung. Spricht beispielsweise der erste auf eine Verlagerung des Bandes an, so wird eine Druckkraft, also eine zusätzliche Vorspannung mittels der Kolben-Zylinder-Einheit aufgebracht. Spricht der zweite, innere Sensor an, wird eine Zugkraft aufgebracht, wodurch die Vorspannung, beispielsweise mittels eines Tellerfederpaketes, des Bandes verringert wird. Mittels der Kolben-Zylinder-Einheit wird erfindungsgemäß sprungartig eine deutliche Zusatzkraft aufgebracht, beispielsweise mittels eines Druckes von 0,5 bis 2 bar. Dieser Sprung ist vorteilhaft und erforderlich, um die bestehende Hysterese im Bandlauf zu überwinden. Im Anschluss wird die Zusatzkraft dann beispielsweise linear weiter erhöht, beispielsweise um 0,1 bis 0,2 bar je Minute. Dieser Vorgang erfolg solange, bis das Band wieder in seinen mittigen Laufbereich zurückgekehrt ist, so dass der entsprechende Sensor nicht mehr belegt wird. Sobald dieser Zustand erreicht ist und der entsprechende Sensor nicht mehr belegt ist, wird die gesamte Kraft (Sprungkomponente und die linear ansteigende Komponente) wieder zurückgenommen. Als Korrekturkomponente verbleibt, ausgehend von der vor dem Regeleingriff bestehenden Kraft, nur ein geringer Kraftanstieg, beispielsweise resultierend in einem Druck zwischen 0,1 und 0,2 bar der Kolben-Zylinder-Einheit. Ein derartiger Regeleingriff erfolgt erfindungsgemäß so oft, bis durch die verbleibenden Korrekturkomponenten die Bandvorspannung derart ausgeglichen ist, dass kein weiteres Verlaufen des Bandes mehr erfolgt.

Erfindungsgemäß ist es möglich, das Verstellelement nur einseitig an der Lagerung der Walze vorzusehen. Es ist jedoch auch möglich, beidseitig beide Lagerbereiche der Walze mit dem erfindungsgemäßen Verstellelement auszubilden.

Die pneumatische Betätigung der Kolben-Zylinder-Einheit umfasst beispielsweise Proportional-Druckregelventile, um die erforderliche additive oder subtraktive Zusatzkraft einstellbar auf das Verstellelement aufzubringen.

Im Folgenden wird die Erfindung anhand von Ausführungsbeispielen in Verbindung mit der Zeichnung beschrieben. Dabei zeigt:
- Fig. 1: eine schematische Seitenansicht eines ersten Ausführungsbeispiels der erfindungsgemäßen Bandlaufregelvorrichtung,
- Fig. 2: eine vereinfachte, perspektivische Darstellung der in Fig. 1 gezeigten Anordnung,
- Fig. 3: eine Seitenansicht der Anordnung gemäß den Fig. 1 und 2,
- Fig. 4: eine vereinfachte schematische Darstellung der Lagemessvorrichtung mit Sensoren,
- Fig. 5: eine perspektivische Darstellung eines weiteren Ausführungsbeispiels der Erfindung, und
- Fig. 6: eine schematische Seitenansicht einer aus dem Stand der Technik bekannten Form- und Kühlvorrichtung mit erfindungsgemäßer Bandlaufregelvorrichtung.

In der nachfolgenden Beschreibung sind gleiche Teile mit gleichen Bezugsziffern versehen.

Die Figuren zeigen eine Walze 1, welche beidseitig einen Lagerzapfen 15 aufweist, der drehbar in einer Lagervorrichtung 16 gelagert ist. Diese ist gegen ein nicht im Einzelnen dargestelltes Maschinengestell mittels elastischer Elemente 3 abgestützt, um ein umlaufendes, endloses Band 2 zu spannen. Hinsichtlich des Aufbaues wird beispielsweise auf den im Zusammenhang mit Fig. 6 beschriebenen Stand der Technik verwiesen.

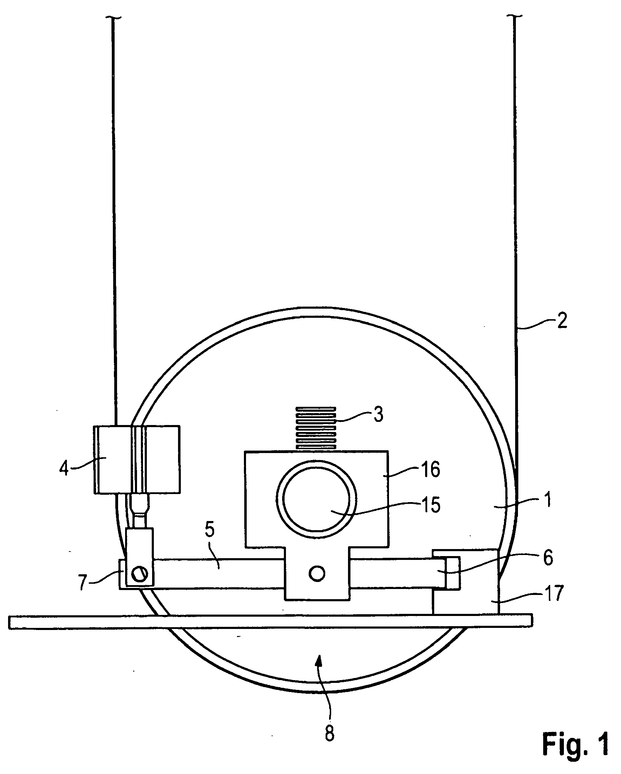

Weiterhin zeigen die Fig. 1 bis 3 ein in Form eines Hebels ausgebildetes Verstellelement 5. Das Verstellelement 5 ist an einem Endbereich 6 an einem Lagerbock 17 schwenkbar gelagert und in seinem mittleren Bereich 8 mit der Lagervorrichtung 16 gekoppelt. Ein weiterer Endbereich 7 des Verstellelements 5 ist mit einer Kolben-Zylinder-Einheit 4 verbunden, welche pneumatisch betätigbar ist. Durch eine Kraftaufbringung durch Verschieben eines Zylinders der Kolben-Zylinder-Einheit 4 ist es somit möglich, eine Druckkraft oder eine Zugkraft auf das Verstellelement 5 (Hebel) aufzubringen. Hieraus ergibt sich eine additive oder subtraktive Kraft zur Druckkraft der elastischen Elemente 3 (Tellerfedern). Auf diese Weise ist es möglich, die Bandspannung seitlich zu verändern und einen exakten Bandlauf zu realisieren.

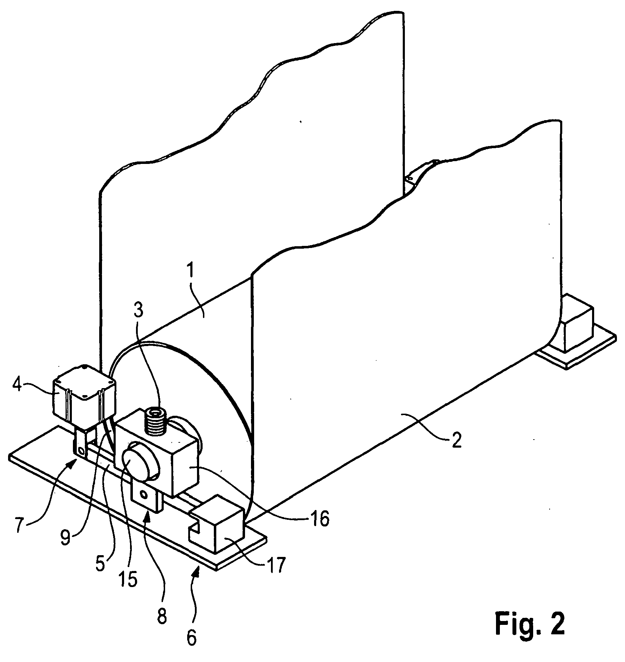

Die Fig. 2 zeigt weiterhin, dass sich durch die geringere Breite der Walze 1, verglichen mit der Breite des Bandes 2, ein seitlich überstehender Bereich 9 des Bandes 2 ergibt, welcher mittels zumindest eines Sensors erfassbar ist.

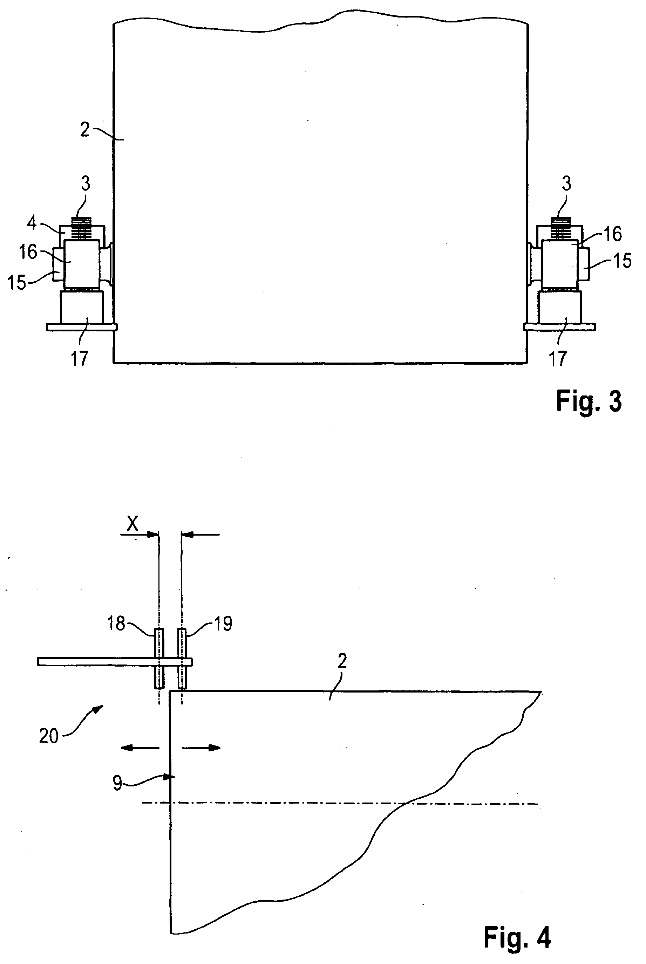

Die Fig. 4 zeigt in schematischer Seitenansicht einen Teilbereich des Bandes 2. Dabei ist insbesondere der seitlich überstehende Bereich 9 zu sehen. Dem seitlich überstehenden Randbereich 9 ist eine Lagemessvorrichtung 20 zugeordnet, welche zwei Sensoren 18, 19 umfasst, die in einem Abstand X voneinander angeordnet sind. Die Position des Bandes 2 stellt die gewünschte Position des Bandes 2 dar, bei welchem dieses mittig oder zentriert zu der Walze 1 umläuft. Eine unerwünschte seitliche Bewegungsrichtung des Bandes 2 ist durch die beiden Pfeile in Fig. 4 dargestellt. Aus der Darstellung der Fig. 4 ergibt sich, dass einer der Sensoren (der Sensor 19) sich an dem seitlich überstehenden Bereich 9 befindet, während der andere Sensor 18 neben dem Band 2 positioniert ist. Die Sensoren 18 und 19 werden somit unterschiedliche Signale abgeben. Verschiebt sich nun der Bandlauf nach links gemäß Fig. 4, so gelangen beide Sensoren 18 und 19 in den Bereich des seitlich überstehenden Randbereichs 9 des Bandes 2 und geben jeweils ein gleiches Signal ab, da beide dem Band 2 zugeordnet sind. Somit kann die Regelung/Steuerung erkennen, in welche Richtung das Band verlaufen ist. Erfolgt demgegenüber, ausgehend von der in Fig. 4 gezeigten Situation, eine Bewegung des Bandes nach rechts, so werden beide Sensoren ein gleiches Signal abgeben, welches anzeigt, dass beide Sensoren nicht mehr im Bereich des Bandes 2 sind. Dieses Signal zeigt somit der Steuerung/Regelung an, dass das Band nach rechts, bezogen auf die Darstellung der Fig. 4, verlaufen ist. Durch diese erfindungsgemäß vorgesehene, sehr einfache Ausgestaltung der Lagemessvorrichtung 20 ist eine zuverlässige Bandlaufregelung möglich.

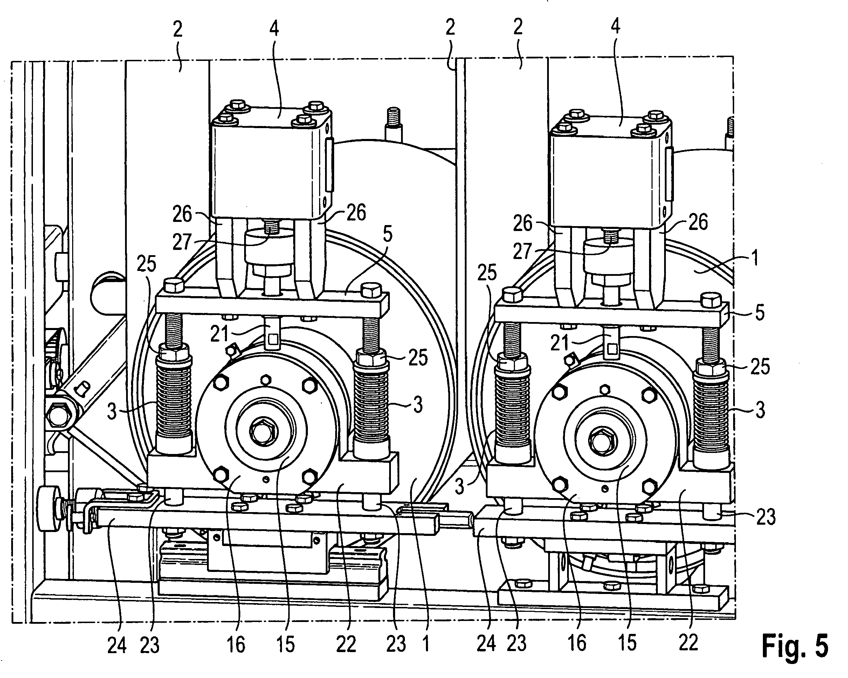

Die Fig. 5 zeigt ein weiteres Ausführungsbeispiel der erfindungsgemäßen Bandlaufregelung. Bei dem in Fig. 5 gezeigten Ausführungsbeispiel sind beidseitig der Walze 1 jeweils zwei elastische Elemente 3 angeordnet, die bevorzugt als Tellerfedern bzw. Tellerfederpakete ausgebildet sind. Die beiden elastischen Elemente 3 sind jeweils über ein Verstellelement 5 verbunden. Somit werden die Vorspannkräfte der elastischen Elemente 3 gleichmäßig auf die Lagervorrichtung 16 übertragen, um das Band 2 zu spannen. Die Fig. 5 zeigt weiterhin, dass im mittleren Bereich des Verstellelements 5, welches jochartig ausgebildet ist, an diesem die Kolben-Zylinder-Einheit 4 gelagert ist. Diese ist analog der in Zusammenhang mit dem ersten Ausführungsbeispiel beschriebenen Kolben-Zylinder-Einheit 4 ausgebildet, so dass sie additiv oder subtraktiv zur Vorspannkraft der elastischen Elemente 3 eine Kraft aufbringen kann und hierdurch ist die erfindungsgemäße Bandlaufregelung möglich.

Die Fig. 5 zeigt weiterhin, dass im Bereich der elastischen Elemente 3 sowie der Kolben-Zylinder-Einheit 4 Schrauben-Muttern-Anordnungen vorgesehen sind, um eine Vorab-Einstellung und Justage durchführen zu können.

Die beiden elastischen Elemente 3 (Tellerfederpakete) stützen sich gegen einen gemeinsamen Querholm 22 ab, welcher mit der Lagervorrichtung 16 verbunden ist. Der Querholm 22 wird von Bolzen 23 durchgriffen, welche relativ zu dem Querholm 22 bewegbar sind und an einer gemeinsamen Stützplatte 24 befestigt sind. Somit ist es möglich, über die Bolzen 23 und ein am oberen Teil auf diese aufgeschraubte Mutter 25 Druckkräfte auf den Querholm 22 aufzubringen, um das Band 2 vorzuspannen.

Die Fig. 5 zeigt, dass sich die Kolben-Zylinder-Einheit 4 über Streben 26 an dem Verstellelement 5 abstützt. Der nicht dargestellte, doppelt wirkende Kolben der Kolben-Zylinder-Einheit 4 ist über eine Kolbenstange 27 mit dem Zug-Druck-Bolzen 21 verbunden, welcher wiederum an der Lagervorrichtung 16 befestigt ist. Somit kann die Kolben-Zylinder-Einheit 4 additiv oder subtraktiv zu den Vorspannkräften der elastischen Elemente 3 Kräfte auf die Lagervorrichtung 16 aufbringen.

### Bezugszeichenliste

- 1: Walze
- 2: Band
- 3: elastisches Element
- 4: Kolben-Zylinder-Einheit
- 5: Verstellelement / Hebel
- 6, 7: Endbereich
- 8: mittlerer Bereich
- 9: seitlich überstehender Bereich
- 10: obere Walze
- 11: untere Walze
- 12: Lebensmittelmasse / Käseschmelze
- 13: Kühlflüssigkeit
- 14: Band der Lebensmittelmasse
- 15: Lagerzapfen
- 16: Lagervorrichtung
- 17: Lagerbock
- 18, 19: Sensor
- 20: Lagemessvorrichtung
- 21: Zug-/Druckbolzen
- 22: Querholm
- 23: Bolzen
- 24: Stützplatte
- 25: Mutter
- 26: Strebe
- 27: Kolbenstange

## Patentansprüche

1. Bandlaufregelvorrichtung mit einem über zumindest eine zylindrische Walze (1) umlaufenden endlosen Band (2), wobei die Walze (1) als von dem Band (2) umschlungene Umlenkwalze ausgebildet ist und wobei die zylindrische Walze (1) beidseitig mittels elastischer Elemente (3), welche jeweils eine Vorspannkraft aufbringen, welche gleichwirkend zur Zentrierung des Bandes (2) relativ zur Walze (1) ausgebildet sind, zur Spannung des Bandes (2) vorgespannt ist, und wobei eine Lagemessvorrichtung (20) im Bereich des Bandes (2) vorgesehen ist, **dadurch gekennzeichnet, dass eine pneumatische** Kolben-Zylinder-Einheit (4) **an zumindest einer Seite der Walze (4),** doppeltwirkend ausgebildet ist und eine Druckkraft oder eine Zugkraft additiv oder subtraktiv zur Vorspannkraft des elastischen Elements (3) auf **ein mittels der Kolben-Zylinder-Einheit (4) betätigbares** Verstellelement (5) aufbringt.

2. Vorrichtung nach Anspruch 1, **dadurch gekennzeichnet, dass** das Verstellelement (5) in Form eines einseitigen Hebels ausgebildet ist, der an einem Endbereich (6) schwenkbar gelagert ist und an seinem anderen Endbereich (7) mit der Kolben-Zylinder-Einheit (4) gekoppelt ist, während ein mittlerer Bereich mit dem elastischen Element (3) gekoppelt ist.

3. Vorrichtung nach Anspruch 1, **dadurch gekennzeichnet, dass** das Verstellelement (5) in Form eines die beiden elastischen Elemente (3) verbindenden Elements ausgebildet ist, dessen mittlerer Bereich mit der Kolben-Zylinder-Einheit (4) gekoppelt ist.

4. Vorrichtung nach einem der Ansprüche 1 bis 3, **dadurch gekennzeichnet, dass** das elastische Element (3) Tellerfedern umfasst.

5. Vorrichtung nach einem der Ansprüche 1 bis 4, **dadurch gekennzeichnet, dass** die Lagemessvorrichtung (20) nur einseitig am Band angeordnet ist.

6. Vorrichtung nach Anspruch 5, **dadurch gekennzeichnet, dass** zumindest ein induktiv wirkender Sensor (18, 19) vorgesehen ist.

7. Vorrichtung nach einem der Ansprüche 1 bis 6, **dadurch gekennzeichnet, dass** die Walze (1) eine geringere Breite aufweist, als das Band (2).

8. Vorrichtung nach Anspruch 7, **dadurch gekennzeichnet, dass** ein seitlich überstehender Bereich (9) des Bandes (2) durch die Lagemessvorrichtung (20) erfassbar ist.

9. Vorrichtung nach einem der Ansprüche 6 bis 8, **dadurch gekennzeichnet, dass** mehrere Sensoren (18, 19) vorgesehen sind.

10. Form- und Kühlvorrichtung für eine fließfähige aufgeschmolzene Lebensmittelmasse (12), insbesondere Schmelzkäse, mit zwei parallel gegeneinander umlaufenden Kühlbändern (2), welche jeweils über eine obere Walze (10) und eine untere Walze (11) geführt und zur Bildung eines endlosen Bandes (14) der Lebensmittelmasse voneinander beabstandet sind, **gekennzeichnet durch** eine Bandlaufregelvorrichtung nach einem der Ansprüche 1 bis 9.

11. Vorrichtung nach Anspruch 10, **dadurch gekennzeichnet, dass** das Band (2) vertikal umläuft und die Walze (1) als untere Umlenkwalze ausgebildet ist.

## Claims

1. A belt run control device with an endless belt (2) revolving over at least one cylindrical roller (1), wherein the roller (1) is designed as a deflection roller around which the belt (2) is wrapped, and wherein the cylindrical roller (1) is preloaded for tensioning the belt (2) on both sides by way of elastic elements (3) which apply each a preloading force, which are designed to be equally acting in order to center the belt (2) relative to the roller (1), and wherein a position measuring device (20) is provided in the region of the belt (2), **characterized in that** a pneumatic piston-cylinder unit (4) is designed as a dual-acting unit at at least one side of the roller (4) and applies a compression force or a tension force additively or subtractively with respect to the preloading force of the elastic element (3) to an adjusting element (5) which is actuatable by means of the piston-cylinder unit (4).

2. The device according to claim 1, **characterized in that** the adjusting element (5) is in the form of a second-order lever that is pivotably supported at one end region (6) and is coupled to the piston-cylinder unit (4) at the other end region (7) thereof, while a central region is coupled to the elastic element (3).

3. The device according to claim 1, **characterized in that** the adjusting element (5) is in the form of an element connecting the two elastic elements (3), the central region of which is coupled to the piston-cylinder unit (4).

4. The device according to one of the claims 1 to 3, **characterized in that** the elastic element (3) comprises disk springs.

5. The device according to one of the claims 1 to 4, **characterized in that** the position measuring device (20) is disposed on only one side of the belt.

6. The device according to claim 5, **characterized in that** at least one inductively acting sensor (18, 19) is provided.

7. The device according to one of the claims 1 to 6, **characterized in that** the roller (1) has a smaller width than the belt (2).

8. The device according to claim 7, **characterized in that** a laterally overhanging region (9) of the belt (2) is detectable by the position measuring device (20).

9. The device according to one of the claims 6 to 8, **characterized in that** a plurality of sensors (18, 19) is provided.

10. A forming and cooling device for a flowable, melted food mass (12), more particularly processed cheese, comprising two cooling belts (2) revolving in parallel in opposite directions, which are both guided over an upper roller (10) and a lower roller (11) and are separated from each other in order to form a continuous strip (14) of the food mass, **characterized by** a belt run control device according to one of the claims 1 to 9.

11. The device according to claim 10, **characterized in that** the belt (2) revolves vertically and the roller (1) is designed as a lower deflection roller.

## Revendications

1. Dispositif de régulation de déroulement de bande avec une bande (2) sans fin tournant sur au moins un rouleau cylindrique (1), le rouleau (1) étant réalisé en tant que rouleau de renvoi enroulé par la bande (2) et le rouleau cylindrique (1) étant précontraint de part et d'autre à l'aide d'éléments élastiques (3) qui appliquent respectivement une force de précontrainte, qui sont réalisés à action égale pour le centrage de la bande (2) par rapport au rouleau (1), pour la tension de la bande (2), et un dispositif de mesure de position (20) étant prévu dans la zone de la bande (2), **caractérisé en ce qu'**une unité de piston et cylindre (4) pneumatique est réalisée à double action sur au moins un côté du rouleau (4) et applique une force de pression ou une force de traction en plus ou en moins par rapport à la force de précontrainte de l'élément élastique (3) sur un élément de réglage (5) actionnable à l'aide de l'unité de piston et cylindre (4).

2. Dispositif selon la revendication 1, **caractérisé en ce que** l'élément de réglage (5) est réalisé sous la forme d'un levier unilatéral qui est logé de manière à pouvoir pivoter sur une zone d'extrémité (6) et est couplé sur son autre zone d'extrémité (7) à l'unité de piston et cylindre (4), alors qu'une zone médiane est couplée à l'élément élastique (3).

3. Dispositif selon la revendication 1, **caractérisé en ce que** l'élément de réglage (5) est réalisé sous la forme d'un élément reliant les deux éléments élastiques (3), dont la zone médiane est couplée à l'unité de piston et cylindre (4).

4. Dispositif selon l'une quelconque des revendications 1 à 3, **caractérisé en ce que** l'élément élastique (3) comporte des rondelle-ressorts.

5. Dispositif selon l'une quelconque des revendications 1 à 4, **caractérisé en ce que** le dispositif de mesure de position (20) est agencé uniquement d'un côté sur la bande.

6. Dispositif selon la revendication 5, **caractérisé en ce qu'**au moins un capteur agissant par voie inductive (18, 19) est prévu.

7. Dispositif selon l'une quelconque des revendications 1 à 6, **caractérisé en ce que** le rouleau (1) présente une largeur plus petite que la bande (2).

8. Dispositif selon la revendication 7, **caractérisé en ce qu'**une zone dépassant latéralement (9) de la bande (2) peut être détectée par le dispositif de mesure de position (20).

9. Dispositif selon l'une quelconque des revendications 6 à 8, **caractérisé en ce que** plusieurs capteurs (18, 19) sont prévus.

10. Dispositif de formage et de refroidissement pour une masse alimentaire (12) fondue, pouvant s'écouler, en particulier du fromage fondu, avec deux bandes de refroidissement (2) tournant l'une contre l'autre en parallèle qui sont guidées respectivement par un rouleau supérieur (10) et un rouleau inférieur (11) et sont espacées l'une de l'autre pour la formation d'une bande sans fin (14) de la masse alimentaire, **caractérisé par** un dispositif de régulation de déroulement de bande selon l'une quelconque des revendications 1 à 9.

11. Dispositif selon la revendication 10, **caractérisé en ce que** la bande (2) tourne verticalement et le rouleau (1) est réalisé en tant que rouleau de renvoi inférieur.
